(19) Europäisches Patentamt
European Patent Office
Office européen des brevets

(11) **EP 2 503 036 A1**

(12) **EUROPEAN PATENT APPLICATION**
published in accordance with Art. 153(4) EPC

(43) Date of publication:
**26.09.2012 Bulletin 2012/39**

(21) Application number: **10831404.8**

(22) Date of filing: **06.10.2010**

(51) Int Cl.:
*D02G 3/04* (2006.01)    *B29B 11/16* (2006.01)
*B29K 101/12* (2006.01)    *B29K 105/08* (2006.01)
*B29K 201/00* (2006.01)

(86) International application number:
**PCT/JP2010/067578**

(87) International publication number:
**WO 2011/062007 (26.05.2011 Gazette 2011/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2009 JP 2009261529**

(71) Applicant: **Kurashiki Boseki Kabushiki Kaisha Kurashiki-shi Okayama 710-0054 (JP)**

(72) Inventors:
• **NAKASE Kazuhiro**
**c/o Kurashiki Boseki K.K. Technical Research lab.**
**Neyagawa-shi, Osaka 572-0823 (JP)**

• **KASUYA, Akira**
**c/o Kurashiki Boseki K.K. Technical Research lab.**
**Neyagawa-shi, Osaka 572-0823 (JP)**

(74) Representative: **de Bresser, Sara Jean**
**Dehns**
**St Bride's House**
**10 Salisbury Square**
**London EC4Y 8JD (GB)**

(54) **SPUN YARN AND INTERMEDIATE FOR FIBER-REINFORCED RESIN, AND MOLDED ARTICLE OF FIBER-REINFORCED RESIN USING SAME**

(57)    Disclosed is a spun yarn for a fiber-reinforced plastic, which is composed of blended yarns (3a, 3b) of a natural plant fiber and a synthetic fiber. The synthetic fiber is a thermoplastic synthetic fiber capable of serving as a matrix resin in a FRP. Also disclosed is an intermediate for a fiber-reinforced plastic that is a woven fabric, a knitted fabric, a multiaxial warp knitted fabric or a braided fabric, formed of the aforementioned spun yarn for a fiber-reinforced plastic. Also disclosed is a fiber-reinforced plastic molded article that is obtained by heating and press-molding the intermediate for a fiber-reinforced plastic at a mold temperature equal to or higher than the melting point of the synthetic fiber, or by aligning the spun yarn for a fiber-reinforced plastic in at least one direction, heating and press-molding the same at a mold temperature equal to or higher than the melting point of the synthetic fiber. Thus, the spun yarn for a fiber-reinforced plastic that exhibits superior integrity between the natural plant fiber and the synthetic fiber and that also a good moldability can be obtained at a low cost. And furthermore, the intermediate and the fiber-reinforced plastic molded article using the same can be provided.

FIG. 3A

FIG. 3B

FIG. 3C

**Description**

Technical Field

The present invention relates to a spun yarn for a fiber-reinforced plastic including a natural plant fiber and an intermediate, and a fiber-reinforced plastic molded article using the same.

Background Art

Plastics are used for the interiors of automobiles, airplanes, vehicles and the like, and they are lightweight as compared with metal. Since plastics alone have an insufficient strength, short glass fiber (cut to a certain length) is mixed with plastics. However, when such a mixture is disposed of and burned in an incinerator, plastics decompose into $CO_2$ and water, while glass melts to become solid and adheres to the inside of the incinerator. It is feared, for example, that this significantly shortens the life of incinerators. As a material having a strength as high as glass, carbon fiber is known, which, however, is expensive and thus is not suitable for a practical use.

As a solution to these problems, in recent years, a fiber-reinforced thermoplastic (FRTP) molded article reinforced with a natural plant fiber has been attracting increased social attention, since such a fiber-reinforced thermoplastic molded article brings no environmental problem for the following reasons. That is, this fiber-reinforced thermoplastic molded article is recyclable in such a manner as to be reusable in terms of material recycling and as to emit no poisonous gas when burned in terms of thermal recycling. Further, this fiber-reinforced thermoplastic molded article can provide a lightweight mobile object, which addresses energy problems, and weight reduction can enhance fuel economy. Further, natural plant fiber absorbs carbon dioxide during photosynthesis, and emits the same amount of carbon dioxide as before the absorption of carbon dioxide when burned.

Fiber-reinforced plastics using natural plant fibers as reinforcing fibers are proposed in Patent Documents 1 and 2. Patent Document 1 describes a fiber-reinforced plastic using a short flax fiber processed into a nonwoven fabric, a woven fabric, or a knitted fabric. Patent Document 2 describes a fiber-reinforced plastic using a short kenaf fiber processed into a nonwoven fabric or a woven fabric.

Further the inventors proposed a fiber-reinforced plastic molded article produced by melting and integrating a natural plant fiber such as flax and a plastic film (Patent Document 3). The inventors proposed also a composite yarn for a fiber-reinforced plastic molded article, which is prepared from a covering yarn formed by winding a plastic fiber yarn to cover around a natural plant fiber such as flax (Patent Document 4).

However, according to Patent Document 1 or 2, short fibers such as a flax fiber or a kenaf fiber processed into a nonwoven fabric, a woven fabric, or a knitted fabric are used to form a fiber-reinforced plastic (FRP) by melt-blending with or impregnating into a resin. Therefore, there is a difficulty for the resin to permeate into the fiber. As a result, a large-scale apparatus is required and the molding is not easy. Especially, a natural plant fiber has a disintegration temperature lower than those of a glass fiber or a carbon fiber, and thus a thermoplastic resin to make a matrix resin cannot be heated to have a viscosity to permeate easily, and the problem of permeability is serious.

The inventors have found that in Patent Document 3, it is difficult to melt the plastic film so as to be impregnated into a natural plant fiber. Regarding the invention according to Patent Document 4, the cost for manufacturing the covering yarn is high and in a case of making a multiaxial warp knitted fabric, a plastic film to be used for covering will be caught easily by a pin tenter or the like, which causes a problem of deterioration in the productivity.

Prior Art Documents

Patent Documents

Patent Document 1: JP 2004-143401
Patent Document 2: JP 2004-149930
Patent Document 3: JP 2007-138361
Patent Document 4: JP 2008-240193

Disclosure of Invention

Problem to be Solved by the Invention

For solving the above-described problems, the present invention aims to obtain at a low cost a spun yarn for a fiber-reinforced plastic having a favorable integrity between a natural plant fiber and a synthetic fiber and a favorable moldability, where the resin permeates uniformly into the natural plant fiber. Also the present invention aims to obtain an intermediate and a fiber-reinforced plastic molded article using the same.

Means for Solving Problem

A spun yarn for a fiber-reinforced plastic of the present invention is characterized in that it is a spun yarn for a fiber-reinforced plastic (FRP) including a natural plant fiber and a synthetic fiber, wherein the natural plant fiber and the synthetic fiber make a blended yarn, and the synthetic fiber is a thermoplastic synthetic fiber that serves as a matrix resin in the FRP.

An intermediate for a fiber-reinforced plastic of the present invention is characterized in that it is prepared by processing the spun yarn for a fiber-reinforced plastic so as to make a woven fabric, a knitted fabric, a multiaxial warp knitted fabric, or a braided fabric.

A fiber-reinforced plastic molded article of the present invention is characterized in that it is prepared by heating and press-molding the intermediate for a fiber-reinforced plastic at a mold temperature equal to or higher than the melting point of the synthetic fiber.

Another fiber-reinforced plastic molded article of the present invention is characterized in that it is prepared by aligning the spun yarn for a fiber-reinforced plastic in at least one direction and heating and press-molding at a mold temperature equal to or higher than the melting point of the synthetic fiber.

Effects of the Invention

In the present invention, a natural plant fiber and a synthetic fiber make a blended yarn, and the synthetic fiber is a thermoplastic synthetic fiber that serves as a matrix resin in a FRP. As a result, when being heated to a temperature equal to or higher than the melting point of the synthetic fiber, the synthetic fiber is melted, and the molten thermoplastic resin penetrates into the natural plant fiber. Thereby the natural plant fiber and the molten thermoplastic resin are conjugated and integrated efficiently. Namely, since the synthetic fiber is blended uniformly with the natural plant fiber, the resin permeates easily into the natural plant fiber when melted. As a result, a fiber-reinforced plastic having a favorable moldability and uniform physical properties can be obtained. Further, as the natural plant fiber and the synthetic fiber are blended uniformly, both the integrity and the handling are favorable, and in addition the productivity can be improved. In a case of using two or more kinds of natural plant fibers, e.g., in a case of using jointly a cotton fiber and a flax fiber for the natural plant fibers, the blend ratio can be varied easily, and a uniform blending becomes possible. Therefore, the process of using such a blended yarn is particularly useful. This holds true for a case of using at least two kinds of synthetic fibers.

Furthermore, since a natural plant fiber is used, the environmental problem caused by disposal can be dissolved. Further, the blended spun yarn of a natural plant fiber and a synthetic fiber can be handled as a continuous fiber, thereby improving the content per volume (Vf) of the natural plant fiber in the molded article. Regardless of differences inherent in the natural plant fiber, such as individual differences or variations depending on the harvest sites, a stable physical property can be obtained due to the blending in the spinning process.

Brief Description of Drawings

[FIG. 1] FIGs. 1A-1B are side views showing a spun yarn for a fiber-reinforced plastic used as a single yarn in one embodiment of the present invention.

[FIG. 2] FIGs. 2A-2B are side views showing a spun yarn for a fiber-reinforced plastic used as a single yarn in another embodiment of the present invention.

[FIG. 3] FIG. 3A is a perspective view showing a process for molding an article through a pressing process by use of a spun yarn for a fiber-reinforced plastic in one embodiment of the present invention. FIG. 3B is a perspective view showing the same molding method, and FIG. 3C is a cross-sectional view showing the same.

[FIG. 4] FIG. 4 is a conceptual perspective diagram showing a multiaxial warp knitted fabric as an application example of the present invention.

[FIG. 5] FIG. 5A is a plan view showing a sheet-like molded article in Example 1 of the present invention. FIG. 5B shows a sample of the sheet-like molded article for a tensile test, and FIG. 5C is a cross-sectional view taken along a line I-I in FIG. 5B.

[FIG. 6] FIG. 6 is a graph illustrating the relationship between the molding temperature and the tensile strength in Example 3.

[FIG. 7] FIG. 7 is a graph illustrating the relationship between the molding time and the tensile strength in Example 3.
[FIG. 8] FIG. 6 is a graph illustrating the relationship between the molding pressure and the tensile strength in Example 3.

Description of the Invention

In the present invention, a spun yarn prepared by blending a natural plant fiber and a thermoplastic synthetic fiber is used. This spun yarn is aligned in a predetermined direction and molded by heating and pressing, thereby the synthetic fiber is melted to serve directly as a matrix resin in a FRP. The molten thermoplastic synthetic resin penetrates into the natural plant fiber quickly and uniformly, thereby the natural plant fiber and the synthetic fiber are conjugated and integrated efficiently.

The spun yarn for a fiber-reinforced plastic of the present invention is obtained by blending a natural plant fiber and a synthetic fiber in a spinning process. For example, the fibers are blended in at least one step in a spinning process selected from the group consisting of a blow-scutching step, a carding step, a sliver lapping step, a ribbon lapping step, a drawing step, and a roving step. The spun yarn is produced in a ring spinning by subjecting to a predetermined amount of twist. Examples of a process excluding such a twist include an open-end spinning and an air-jet spinning. The blended spun yarn of the present invention can be produced by any of these steps.

Examples of the natural plant fiber applicable in the present invention include: a cotton fiber; a flax fiber such as linen, ramie, kenaf or jute; a bamboo fiber; and kapok. Cotton is preferable as it is produced in quantities and thus available at a low cost. A flax fiber such as linen and ramie is preferable because it is suitable as a reinforcing fiber due to its excellent mechanical properties and further because the raw material can be supplied stably. Though it is preferable that the flax fiber is dried before molding, it can be used without being subjected to drying and thus in a state of possessing an equilibrium moisture regain, since a high strength can be maintained due to the equilibrium moisture regain. The preferable fiber length for a natural plant fiber is 20 to 400 mm. Specifically, the preferable fiber length for the cotton fiber is 20 to 50 mm, and for the flax fiber (ramie), 20 to 300 mm. A fiber having the fineness and fiber length of such ranges can be handled easily as a FRP fiber and blended easily.

For the resin to form the thermoplastic synthetic fiber applicable in the present invention, it is preferable that the resin is used in general for a FRP matrix resin and has a melting point lower than the disintegration temperature of the natural plant fiber. For example, when cotton or flax fiber is used for the natural plant fiber, a resin having a melting point not lower than 90°C and not higher than 200°C is preferable. Examples of the resin include polypropylene (PP), polyethylene (PE), and a copolymer thereof, copolyester, copolyamide, polyvinyl chloride, copolyacetal, polylactic acid or polysuccinate butyl. It is preferable that the fineness and fiber length of the thermoplastic synthetic fiber are substantially equal to those of the natural plant fiber. In particular, it is preferable that the difference in the fiber lengths of the natural plant fiber and the thermoplastic synthetic fiber is at most about 20 mm.

A preferable blend ratio of the natural plant fiber to the thermoplastic synthetic fiber is in a range of 80:20 to 30:70 by weight. When the blend ratio is in this range, the natural plant fiber and the molten resin of the thermoplastic synthetic fiber can be conjugated and integrated efficiently.

It is preferable that the blended yarn is subjected to an actual twist described below at a twist factor K of 2 to 7:

$$K = t/S^{1/2}$$

where t denotes a twist amount per unit length of 25.4 mm, S denotes a cotton count, and $S^{1/2}$ denotes [Formula 1]

$$\sqrt{S} \; .$$

When the twist factor is in the above range, the production cost can be reduced, the yarn strength can be improved, and the processability and handling are favorable.

It is preferable that the fineness of the spun yarn of the present invention is in a range of 4 to 100 in cotton count (50 to 1,500 dtex). When the fineness is in this range, the production cost can be reduced, the yarn strength can be improved, and the processability and handling are favorable.

In the present invention, the blended yarn can be used as a single yarn. Alternatively, a plurality of yarns may be arranged in parallel, or a plurality of yarns may be twisted in an application. From the viewpoint of cost performance, single yarn application or application of a plurality of arranged yarns is advantageous.

The yarn for a fiber-reinforced plastic of the present invention can be made to FRP by arranging the yarn directly by roving or the like. Alternatively, the yarn can be made to a woven fabric, a knitted fabric, a multiaxial warp knitted fabric, or a braided fabric so as to provide an intermediate for a fiber-reinforced plastic. Such an intermediate can be made to a prepreg to be used for a finally-molded product. The woven fabric, the knitted fabric, and the multiaxial warp knitted fabric can be shaped like a sheet in application, and the braided fabric can be shaped like a pipe in application. Any known structure can be used for the woven fabric and the knitted fabric.

In order to provide such a molded article, the temperature of a mold used for pressure molding is set to a temperature not lower than the melting point of the resin that makes the thermoplastic synthetic fiber and not higher than the disintegration temperature of the natural plant fiber. Alternatively, the yarn for a fiber-reinforced plastic is aligned in at least one direction and the temperature of the mold for pressure-molding is set not to be lower than the melting point of the resin that makes the thermoplastic synthetic fiber and not higher than the disintegration temperature of the natural plant fiber, thereby obtaining a fiber-reinforced plastic molded article. It is particularly preferable that the molding is carried out at a temperature as high as possible within the above-mentioned temperature range, considering the ability of the thermoplastic resin to impregnate the natural plant fiber. When a flax fiber is used as the natural plant fiber, it is preferable that the temperature of the mold does not exceed about 200°C. When the melting point of the resin for forming the thermoplastic synthetic fiber is about 120°C and lower than the disintegration temperature of the flax fiber, the molding can be carried out at a temperature higher by about 0°C to about 50°C than the melting point.

For producing the fiber-reinforced thermoplastic molded article, conventionally-known methods can be applied. The examples are hot-stamping method, a prepreg-molding method, a press-molding method and the like.

For the spun yarns for a fiber-reinforced plastic of the present invention, a plurality of spun yarns are aligned by arranging in parallel to shape a sheet, or a single spun yarn is folded to shape a sheet. One or plural sheet(s) of the spun yarn can be used. In a case of laminating a plurality of sheets, the alignment direction of the spun yarn may be changed. For example, with respect to the alignment of the spun yarn of the first sheet, the alignment direction of the spun yarns in the second and following sheets may be shifted by 30°, 45°, 60°, and 90°. The thus aligned sheets are heated and pressed at a temperature equal to or higher than the melting point of the synthetic fiber, thereby a fiber-reinforced plastic molded article is obtained.

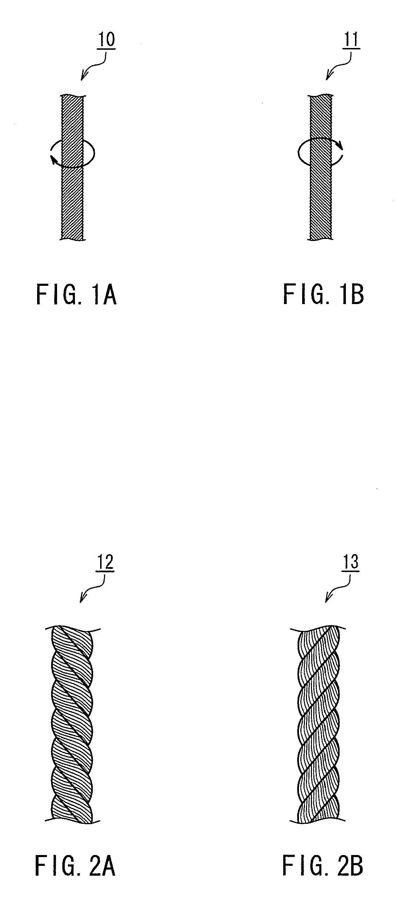

The present invention will be explained further with reference to the attached drawings. FIGs. 1A-1B are side views of a spun yarn for a fiber-reinforced plastic as a single yarn in one embodiment of the present invention. A spun yarn 10 for a fiber-reinforced plastic in FIG.1A is a blended yarn of a natural plant fiber and a thermoplastic synthetic fiber (z twist). The spun yarn 11 for a fiber-reinforced plastic in FIG. 1B is a blended yarn of a natural plant fiber and a thermoplastic synthetic fiber (s twist). Both twists can be employed in the present invention.

FIGs. 2A-2B are side views showing a spun yarn for a fiber-reinforced plastic in another embodiment of the present invention. The spun yarn 12 for a fiber-reinforced plastic in FIG. 2A is a blended yarn of a natural plant fiber and a thermoplastic synthetic fiber (first twist s, final twist s). The spun yarn 13 for a fiber-reinforced plastic in FIG. 2B is a blended yarn of a natural plant fiber and a thermoplastic synthetic fiber (first twist s, final twist z). The combination of the first and final twists is not limited particularly, and any of these twists can be employed.

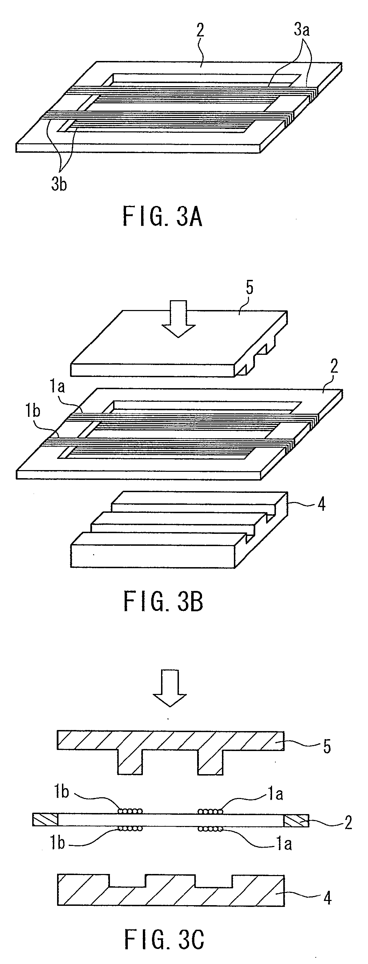

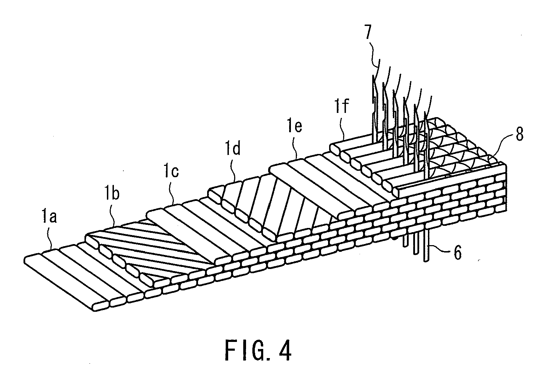

FIG. 3A is a perspective view showing a process of forming a molded article by a pressing method from the spun yarn for a fiber-reinforced plastic according to one embodiment of the present invention. FIG. 3B is a perspective view showing the same molding process, and FIG 3C is a cross-sectional view of the same. Blended spun yarns 3a, 3b of a natural plant fiber and a thermoplastic synthetic fiber are wound around a metal frame 2 in one direction. The winding number is for example 220 with respect to a width of 20 mm and the winding weight is about 7 g. The yarns were wound at two sites of the metal frame 2 with a certain spacing therebetween. As shown in FIG. 4B, the wound spun yarns 3a, 3b are subjected to heat and pressure by heat-press molds 4, 5 so as to be melted and integrated. When a polypropylene (PP) short fiber (38 mm length) is used for the thermoplastic synthetic fiber, the melting point is about 170°C. When a cotton fiber is used for the natural plant fiber, the disintegration temperature is about 235°C. In such a case, the mold temperature is 180-220°C, the pressure is 1-20 MPa, and the heat-molding time is about 0.5 to 20 minutes. It is particularly preferable that the mold temperature is 180-210°C, the pressure is 2-8 MPa, and the heat molding time is about 2-10 minutes.

FIG. 4 is a conceptual perspective view showing a multiaxial warp knitted fabric. Spun yarns 1a-1f for a fiber-reinforced plastic respectively aligned in plural directions are stitched (bound) in the thickness direction with stitching yarns 7, 8 threaded through a knitting needle 6 so as to be integrated. It is also possible to mold such a multiaxial warp knitted fabric as a fiber reinforcing intermediate by heat-pressing. This multiaxial laminated sheet can be made to a fiber-reinforcing plastic having an excellent reinforcement effect in multi-directions. The stitching yarns may be replaced by or jointly used with a binder.

Examples

Hereinafter, the present invention will be specified with reference to Examples, although the present invention is not limited to the following Examples.

(Example 1)

(1) Production of blended spun yarn

In the present Example, a blended spun yarn 10 having a structure as shown in FIG. 1 was produced. For the natural plant fiber, a cotton fiber produced in the United States (average fiber length: 28 mm) was used, and for the thermoplastic synthetic fiber, a polypropylene fiber (PP fiber) (supplied by Daiwabo Polytech Co., Ltd. with the trade name of "PN-17038'; single fiber fineness: 1.6 dtex; average fiber length: 38 mm) was used. The yarn was provided by blending and feeding in a drawing step the respective slivers at a predetermined ratio. The spinning was ring spinning, and the target count was 7th (cotton count).

(2) Sheet molding

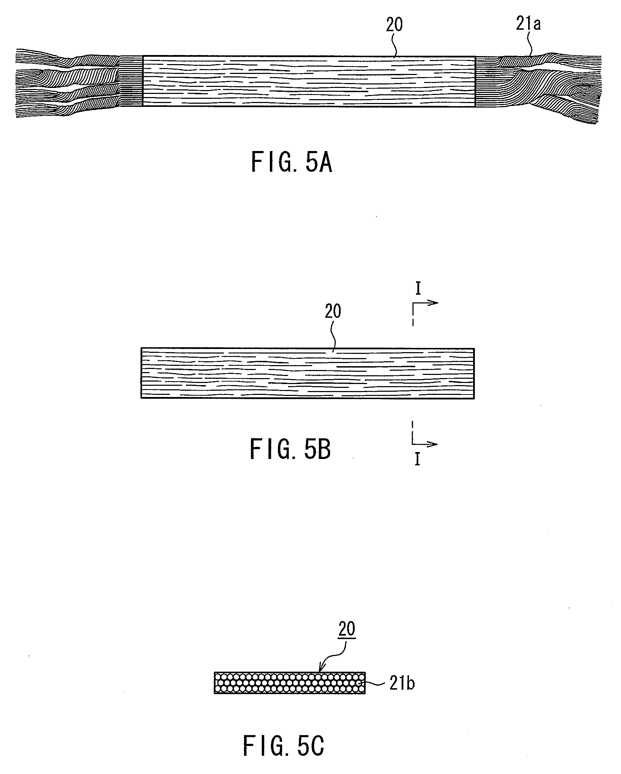

A molded article was produced from the thus obtained blended spun yarn by the pressing method as shown in FIGs. 3A-3C. First, spun yarns 3a, 3b were wound around a metal frame 2 in one direction as shown in FIG. 3A. The metal frame was 380 mm in length, 260 mm in width and 2 mm in height. The number of the spun yarns 3a on the upper surface and the lower surface were 110 respectively with respect to the width of 20 mm, namely, 220 in total. Similarly, the number of the spun yarns 3b was set to 220 in total. As shown in FIG. 3A, the spun yarns were wound at two sites of the metal frame 2 with a predetermined spacing therebetween. The wound yarns were applied with heat and pressure by heat-press molds 4, 5 as shown in FIGs. 3B-3C so as to be melted and integrated. Since the PP fiber has a melting point of 170°C, the mold temperature was set to 200°C. The pressure was 4 MPa, and the molding time was 5 minutes. FIG. 5A is a plan view showing the thus obtained sheet-like molded article. The center is a sheet-like molded part 20, and the both ends are yarn ends 21a. The obtained sheet-like molded article was cut to have a length of 200 mm, thereby preparing a sample (length: 200 mm; width: 20 mm; thickness: about 0.8 mm) for a tensile test of the sheet-like molded part 20 as shown in FIG. 5B. FIG. 5C is a cross-sectional view taken along a line I-I in FIG. 5B, illustrating a spun yarn embedded in a resin. Since a sample to be used for a bending test is required to be thicker, the winding number was doubled (220 for the upper surface and the lower surface respectively, and 440 in total) and the molding was carried out in a similar manner. The obtained sheet-like molded article was cut to have a length of 50 mm, thereby a sample (length: 50 mm; width: 20 mm; thickness: about 1.5 m) for a bending test was obtained.

(3) Measurement of physical properties

The yarn physical properties and also the tensile elastic modulus, the tensile strength, the bending elastic modulus and the bending strength were measured. The yarn physical properties were measured in accordance with JISL 1095:1999.
The tensile test was performed in conformance with JISK 7054:1995 by using AutographAG-IS (supplied by Shimadzu Corporation), where the distance between grippers were 100 mm, and the test rate was 1 mm/min. The bending test was performed in conformance with JISK 7017:1999 (3-points bending test), where the distance between fulcra was 24 mm, and the test rate was 1 mm/min. The conditions and the results are illustrated in Table 1. Test results of a sample prepared for Comparative test are also illustrated. The sample for the Comparative test was prepared from a spun yarn of 100 wt% cotton and a PP film having a thickness of 200 $\mu$m, which were used at a ratio of 50:50, and shaped as a sheet by a film-stacking method.
[Table 1]

| | | Test number | | | | | | | | Comparative test number | |
|---|---|---|---|---|---|---|---|---|---|---|---|
| | | 1-1 | 1-2 | 1-3 | 1-4 | 1-5 | 1-6 | 1-7 | 1-8 | 1-1 | 1-2 |
| Conditions | Cotton:PP blend ratio (wt%:wt%) | 50:50 | 50:50 | 65:35 | 65:35 | 80:20 | 80:20 | 35:65 | 35:65 | Cotton 100 | Cotton 100 |
| | Twist factor | 3.8 | 4.8 | 3.8 | 4.8 | 3.8 | 4.8 | 3.8 | 4.8 | 3.8 | 4.8 |
| | Actual count (cotton count) | 6.87 | 6.87 | 7.01 | 6.92 | 7.05 | 6.98 | 6.87 | 6.87 | 7.16 | 7.13 |
| Yarn physical properties | Moisture content (wt%) | 3.17 | 3.39 | 3.99 | 4.18 | 5.06 | 5.12 | 2.51 | 2.63 | 6.65 | 6.76 |
| | Count variation rate (%) | 1.40 | 2.07 | 1.51 | 1.36 | 1.68 | 1.60 | 2.49 | 2.51 | 1.42 | 1.39 |
| | Single yarn strength (g) | 2073 | 2037 | 1675 | 1778 | 1509 | 1656 | 2598 | 2550 | 1358 | 1371 |
| | Strength variation rate (%) | 6.2 | 5.9 | 5.1 | 5.4 | 5.6 | 5.6 | 5.9 | 5.8 | 5.2 | 4.5 |
| | Single yarn elongation (%) | 14.75 | 15.89 | 10.48 | 12.42 | 8.29 | 9.88 | 18.61 | 19.9 | 8.73 | 9.86 |
| FRP physical properties | Tensile elastic modulus (GPa) | 12.3 | 11.1 | 13.0 | 11.0 | 11.5 | 11.8 | 10.9 | 9.8 | 11.2 | 11.7 |
| | Tensile strength (MPa) | 146 | 140 | 169 | 151 | 160 | 158 | 126 | 121 | 146 | 140 |
| | Bending elastic modulus (GPa) | 10.3 | 9.3 | 12.0 | 10.2 | 8.7 | 8.5 | 9.1 | 8.2 | 6.5 | 6.7 |
| | Bending strength (MPa) | 165 | 158 | 144 | 129 | 116 | 114 | 159 | 153 | 115 | 110 |

As clarified in Table 1, each product of the Example in the present invention exhibited superior bending elastic modulus and bending strength to those of the products of the Comparative test. Furthermore, it was confirmed that the blended spun yarns of the Example in the present invention can be handled easily and the moldability is favorable.

(Example 2)

(1) Production of blended spun yarn

In the present Example, a blended spun yarn 10 having a structure as shown in FIG. 1 was produced. For the natural plant fiber, a cotton fiber produced in the United States (average fiber length: 28 mm) and a flax fiber produced in China (ramie: average fiber diameter: 38 mm) were used. For the thermoplastic synthetic fiber, a polypropylene fiber (PP fiber) (supplied by Daiwabo Polytec Co., Ltd. with the trade name of "PN-17038"; single fiber fineness: 1.6 dtex; average fiber length: 38 mm) was used. The yarn was provided by blending and feeding in a drawing step the respective slivers at a predetermined ratio. The spinning was ring spinning, and the target count was 7th (cotton count).

(2) Sheet molding

A sheet was molded in the same process as in Example 1 except that the molding time was 2 minutes. In preparing a sample for the bending test, similarly to Example 1, the winding number was doubled.

(3) Measurement of physical properties

The yarn physical properties and also the tensile elastic modulus, the tensile strength, the bending elastic modulus and the bending strength were measured in the same manner as in Example 1. The test results are illustrated in Table 2.
[Table 2]

| | | Test number | | | | | | | | | |
|---|---|---|---|---|---|---|---|---|---|---|---|
| | | 2-1 | 2-2 | 2-3 | 2-4 | 2-5 | 2-6 | 2-7 | 2-8 | 2-9 | 2-10 |
| Conditions | Cotton: ramie:PP blend ratio (wt%:wt%: wt%) | 0:50: 50 | 10: 40:50 | 25: 25:50 | 40: 10: 50 | 0:65: 35 | 13: 52: 35 | 33: 32: 35 | 52: 13: 35 | 50:0: 50 | 65:0: 35 |
| | Twist factor (K) | 3.8 | 3.8 | 3.8 | 3.8 | 3.8 | 3.8 | 3.8 | 3.8 | 3.8 | 3.8 |
| | Actual count (Cotton count) | 7.09 | 6.89 | 6.96 | 6.82 | 6.96 | 7.14 | 7.08 | 7.07 | 7.09 | 7.14 |

(continued)

| | | Test number | | | | | | | | | |
| | | 2-1 | 2-2 | 2-3 | 2-4 | 2-5 | 2-6 | 2-7 | 2-8 | 2-9 | 2-10 |
|---|---|---|---|---|---|---|---|---|---|---|---|
| Yarn physical properties | Moisture percentage (wt%) | 4.35 | 3.46 | 3.57 | 3.24 | 4.84 | 4.43 | 2.98 | 4.39 | 3.31 | 3.87 |
| | Count variation rate (%) | 3.73 | 1.25 | 1.94 | 2.13 | 1.08 | 1.44 | 2.11 | 1.63 | 0.84 | 1.27 |
| | Single yarn strength (g) | 2252 | 2171 | 2085 | 2244 | 1498 | 1477 | 1422 | 1553 | 2126 | 1714 |
| | Strength variation rate (5) | 6.5 | 5.9 | 6.1 | 5.3 | 6.2 | 6.0 | 6.7 | 5.0 | 6.0 | 6.8 |
| | Single yarn elongation (%) | 16.7 | 15.91 | 15.17 | 16.6 | 10.31 | 9.2 | 7.0 | 12.5 | 15.3 | 11.35 |
| FRP physical properties | Tensile elastic modulus (GPa) | 19.2 | 17.5 | 14.0 | 12.4 | 21.4 | 19.1 | 16.0 | 13.7 | 12.3 | 12.9 |
| | Tensile strength (MPa) | 144 | 144 | 140 | 141 | 191 | 171 | 160 | 154 | 161 | 177 |
| | Bending elastic modulus (GPa) | 12.8 | 12.3 | 11.5 | 10.9 | 16.8 | 15.3 | 13.5 | 12.0 | 10.5 | 10.8 |
| | Bending strength (MPa) | 160 | 163 | 161 | 167 | 153 | 149 | 140 | 145 | 159 | 144 |

As clarified in Table 2, each product of the Example in the present invention exhibited superior tensile elastic modulus, bending elastic modulus, and bending strength. Furthermore, it was confirmed that the blended spun yarn of the Example in the present invention can be handled easily and the moldability is favorable.

(Example 3)

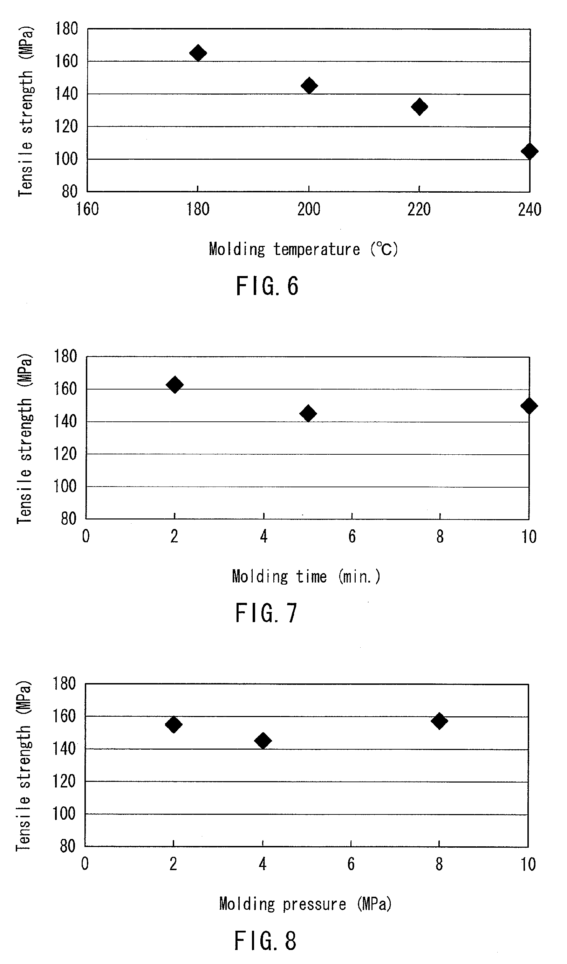

The conditions of the molding temperature, the molding time and the molding pressure were studied by using the blended spun yarn of test number 1-1 in Example 1. FIG. 6 is a graph showing the relationship between the molding temperature and the tensile strength, FIG. 7 is a graph showing the relationship between the molding time and the tensile strength, and FIG. 8 is a graph showing the relationship between the molding pressure and the tensile strength.

As clarified in FIG. 6, it was preferable that the molding temperature (mold temperature) was 180 to 200°C. As clarified in FIG. 7, substantially no problem occurred when the molding time was 2 to 10 minutes. Further, as clarified in FIG. 8, substantially no problem occurred when the molding pressure was in a range of 2 to 8 MPa.

Explanation of Letters and Numerals

1a-1f,3a-3b,10-13,21a:    spun yarn for a fiber-reinforced plastic

| 2: | metal frame |
| 4,5: | heat-press mold |
| 6: | knitting needle |
| 7,8: | stitching yarn |
| 21b: | spun yarn embedded in resin |

## Claims

1. A spun yarn for a fiber-reinforced plastic (FRP) comprising a natural plant fiber and a synthetic fiber,
wherein the natural plant fiber and the synthetic fiber make a blended yarn, and
the synthetic fiber is a thermoplastic synthetic fiber that serves as a matrix resin in the FRP.

2. The spun yarn for a fiber-reinforced plastic according to claim 1, wherein the natural plant fiber is at least one fiber selected from the group consisting of cotton, flax, kapok and bamboo.

3. The spun yarn for a fiber-reinforced plastic according to claim 1, wherein the resin that forms the thermoplastic synthetic fiber has a melting point not lower than 90°C and not higher than 200°C.

4. The spun yarn for a fiber-reinforced plastic according to claim 1 or 3, wherein the thermoplastic synthetic fiber is a fiber of polypropylene (PP), polyethylene (PE), and a copolymer thereof, copolyester, copolyamide, polyvinyl chloride, copolyacetal, polylactic acid or polysuccinate butyl.

5. The spun yarn for a fiber-reinforced plastic according to any of claims 1 to 4, wherein the natural plant fiber and the synthetic fiber are blended at a weight ratio in a range of 80:20 to 30:70.

6. An intermediate for a fiber-reinforced plastic prepared by processing the spun yarn for a fiber-reinforced plastic according to any one of claims 1 to 5 so as to make a woven fabric, a knitted fabric, a multiaxial warp knitted fabric, or a braided fabric.

7. A fiber-reinforced plastic molded article prepared by heating and press-molding the intermediate for a fiber-reinforced plastic according to claim 6 at a mold temperature equal to or higher than the melting point of the synthetic fiber.

8. A fiber-reinforced plastic molded article prepared by aligning the spun yarn for a fiber-reinforced plastic according to any of claims 1 to 5 in at least one direction and heating and press-molding at a mold temperature equal to or higher than the melting point of the synthetic fiber.

10

FIG. 1A

11

FIG. 1B

12

FIG. 2A

13

FIG. 2B

FIG. 3A

FIG. 3B

FIG. 3C

FIG. 4

20    21a

FIG. 5A

I

20

FIG. 5B    I

20

21b

FIG. 5C

FIG. 6

FIG. 7

FIG. 8

**INTERNATIONAL SEARCH REPORT**

| International application No. |
| --- |
| PCT/JP2010/067578 |

| A. CLASSIFICATION OF SUBJECT MATTER |
| --- |
| *D02G3/04*(2006.01)i, *B29B11/16*(2006.01)i, *B29K101/12*(2006.01)n, *B29K105/08*(2006.01)n, *B29K201/00*(2006.01)n |

According to International Patent Classification (IPC) or to both national classification and IPC

| B. FIELDS SEARCHED |
| --- |
| Minimum documentation searched (classification system followed by classification symbols)<br>B29B11/16, B29B15/08-15/14, C08J5/04-5/10, C08J5/24, D02G1/00-3/48, D02J1/00-13/00 |

Documentation searched other than minimum documentation to the extent that such documents are included in the fields searched
    Jitsuyo Shinan Koho        1922–1996    Jitsuyo Shinan Toroku Koho    1996–2010
    Kokai Jitsuyo Shinan Koho    1971–2010    Toroku Jitsuyo Shinan Koho    1994–2010

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 2007-138361 A  (Kurabo Industries Ltd.),<br>07 June 2007 (07.06.2007),<br>claims 1, 6, 8; paragraphs [0009], [0015]<br>& US 2007/0116923 A1<br>paragraphs [0016], [0022]; claims 1, 6, 8<br>& CA 2547823 A1 | 1-8 |
| Y | JP 3193920 B2  (Matsushita Electric Industrial<br>Co., Ltd.),<br>30 July 2001 (30.07.2001),<br>column 4, line 12 to column 4, line 49<br>(Family: none) | 1-8 |
| A | JP 2008-240193 A  (Kurabo Industries Ltd.),<br>09 October 2008 (09.10.2008),<br>claims<br>(Family: none) | 1-8 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    24 November, 2010 (24.11.10) | Date of mailing of the international search report<br>    07 December, 2010 (07.12.10) |
| --- | --- |
| Name and mailing address of the ISA/<br>    Japanese Patent Office | Authorized officer |
| Facsimile No. | Telephone No. |

Form PCT/ISA/210 (second sheet) (July 2009)

## INTERNATIONAL SEARCH REPORT

| International application No. |
| --- |
| PCT/JP2010/067578 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2009-67879 A  (Kurabo Industries Ltd.),<br>02 April 2009 (02.04.2009),<br>claims<br>(Family: none) | 1-8 |
| A | JP 47-10307 B1  (Nippondenso Co., Ltd.),<br>28 March 1972 (28.03.1972),<br>claims<br>(Family: none) | 1-8 |

Form PCT/ISA/210 (continuation of second sheet) (July 2009)

## REFERENCES CITED IN THE DESCRIPTION

**Patent documents cited in the description**

- JP 2004143401 A
- JP 2004149930 A
- JP 2007138361 A
- JP 2008240193 A